Europäisches Patentamt

European Patent Office

Office européen des brevets

(19)

(11) Veröffentlichungsnummer: **0 224 788 B1**

(12) **EUROPÄISCHE PATENTSCHRIFT**

(45) Veröffentlichungstag der Patentschrift: 23.10.91

(51) Int. Cl.5: **C08K 5/13**, C08L 51/04, C08L 55/02

(21) Anmeldenummer: 86115949.9

(22) Anmeldetag: 18.11.86

(54) **Als Stabilisatoren für Polymere geeignete Mischungen.**

(30) Priorität: 30.11.85 DE 3542465

(43) Veröffentlichungstag der Anmeldung:
10.06.87 Patentblatt 87/24

(45) Bekanntmachung des Hinweises auf die
Patenterteilung:
23.10.91 Patentblatt 91/43

(84) Benannte Vertragsstaaten:
DE ES FR GB IT NL

(56) Entgegenhaltungen:
EP-A- 0 192 198
BE-A- 652 122
GB-A- 961 797

(73) Patentinhaber: **BAYER AG**

**W-5090 Leverkusen 1 Bayerwerk(DE)**

(72) Erfinder: **Eichenauer, Herbert, Dr.**
**Goethestrasse 71**
**W-4047 Dormagen 1(DE)**
Erfinder: **Pischtschan, Alfred, Dr.**
**Zur Eiche 33**
**W-5067 Kürten(DE)**
Erfinder: **Ott, Karl-Heinz, Dr.**
**Paul-Klee-Strasse 54**
**W-5090 Leverkusen 1(DE)**

**Beschreibung**

Gegenstand der Erfindung sind Mischungen aus phenolischen Antioxidantien und schwefelhaltigen elastisch-thermoplastischen Pfropfprodukten mit terminalen Thioalkylgruppen, bei denen die Pfropfauflage an auf den Kautschuk polymerisierten Monomeren eine Grenzviskosität von 2 -15 ml/g (gemessen in DMF bei 25° C) aufweist, sowie deren Verwendung als synergistische Stabilisatoren für Polymerisate.

Synthetische Polymere, insbesondere solche mit ungesättigten Bindungen in der Molekülkette, werden bei der Einwirkung von Sauerstoff, Hitze oder Licht abgebaut, was zu einer Verschlechterung der Eigenschaften und zu Problemen beim praktischen Einsatz von aus den Polymeren hergestellten Formkörpern führt.

Um Abbau zu verhindern wurden bereits zahlreiche Stabilisatoren für Polymere beschrieben, auch Mischungen aus sterisch gehinderten Phenolen und schwefelhaltigen Synergisten (vgl. US-PS 4.321.191 und die dort zitierte Literatur).

Es wurde gefunden, daß Mischungen aus phenolischen Antioxidantien und schwefelhaltigen elastisch-thermoplastischen Pfropfprodukten mit terminalen Thioalkylgruppen von harzbildenden Monomeren auf Kautschuke, deren Harzanteil eine Grenzviskosität von 2 -15 ml/g (gemessen in Dimethylformamid bei 25° C) und einen Schwefelgehalt von 1,15 - 3,95 Gew.-% besitzt, Stabilisatoren für Polymerisate mit synergistischer Wirkung, guter Verträglichkeit, und hoher Verseifungsstabilität darstellen.

Gegenstand der Erfindung sind demnach Mischungen aus

A) 1 - 99 Gew.-Teilen, bevorzugt 10 - 90 Gew.-Teilen und besonders bevorzugt 20 - 80 Gew.-Teilen eines schwefelhaltigen elastisch-thermoplastischen Pfropfproduktes von Styrol, $\alpha$-Methylstyrol, p-Methylstyrol, Vinyltoluol, Acrylnitril, Methylmethacrylat oder Mischungen daraus als Pfropfauflagen auf einen teilchenförmigen Kautschuk mit einem mittleren Teilchendurchmesser ($d_{50}$) von 0,05 - 20,0 $\mu$m, vorzugsweise 0,1 - 1,0 $\mu$m und einer Glastemperatur < 10° C als Pfropfgrundlage mit einem Gesamtkautschukgehalt von 1 - 80 Gew.-%, vorzugsweise von 10 - 60 Gew.-%, wobei die Pfropfprodukte einen Schwefelgehalt von 1,15 - 3,95 Gew.-%, vorzugsweise von 1,25 bis 2,40 Gew.-% besitzen und die Pfropfauflage aus auf den teilchenförmigen Kautschuk polymerisierten Monomeren eine Grenzviskosität von 2 -15 ml/g, vorzugsweise von 3 - 12 ml/g (gemessen in Dimethylformamid bei 25° C) aufweist und bei denen mindestens 90 Gew.-% des eingebauten Schwefels als Bestandteil terminaler $C_{1-18}$-Thioalkylgruppen vorliegt,

B) 99 - 1 Gew.-Teilen, bevorzugt 90 - 10 Gew.-Teilen und besonders bevorzugt 80 - 20 Gew.-Teilen eines phenolischen Antioxidans,

C) 0 - 50 Gew.-Teilen, bevorzugt 0 - 45 Gew.-Teilen und besonders bevorzugt 0 - 40 Gew.-Teilen einer phosphorhaltigen stabilisierend wirkenden Verbindung und

D) 0 - 50 Gew.-Teilen, bevorzugt 0 - 45 Gew.-Teilen und besonders bevorzugt 0 - 40 Gew.-Teilen einer stickstoffhaltigen stabilisierend wirkenden Verbindung.

Schwefelhaltige elastisch-thermoplastische Pfropfprodukte A im Sinne der Erfindung sind insbesondere Produkte, die durch Co- oder Terpolymerisation von (kern- oder seitenkettensubstituiertes) Styrol enthaltenden Monomergemischen in Gegenwart eines Kautschuks erhalten werden. Diese Pfropfpolymerisate können durch Lösungs-, Suspensions-oder Emulsionspolymerisation oder durch Kombination dieser Verfahren in an sich bekannter Weise hergestellt werden.

Bevorzugt ist die Emulsionspolymerisation unter Verwendung anionischer Emulgatoren wie z.B. Natrium-, Kalium- oder Ammoniumsalze langkettiger Fettsäuren mit 10 - 20 C-Atomen, z.B. Kaliumoleat, Alkylsulfate mit 10 -20 C-Atomen, Alkylarylsulfonate mit 10 - 20 C-Atomen oder Alkali- bzw. Ammoniumsalze der disproportionierten Abietinsäure.

Die Pfropfpolymerisation kann bevorzugt bei 30 bis 100° C, besonders bevorzugt bei 50 bis 80° C ausgeführt werden.

Geeignete radikalbildende Initiatoren sind organische und anorganische Peroxide, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid, und einem Reduktionsmittel bestehen. Als bevorzugter Initiator wird Kaliumpersulfat eingesetzt, die Einsatzmengen betragen zwischen 0,1 und 1,0 Gew.-% (bezogen auf die Monomermenge).

Als Pfropfgrundlagen werden als Emulsion vorliegende teilchenförmige Kautschuke mit einem mittleren Teilchendurchmesser ($d_{50}$) von 0,05 bis 20,0 $\mu$m, vorzugsweise 0,1 bis 1,0 $\mu$m, und einer Glastemperatur $\leq$ = 10° C verwendet. Beispiele für einsetzbare Kautschuke sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nicht konjugiertes Dien wie z.B. Hexadien-1,5 oder Norbornadien in kleinen Mengen enthalten). Die mittleren Teilchendurchmesser werden mittels Ultrazentrifuge (vergl. W. Scholtan, H. Lange: Kolloid-Z. u. Z.Polymere 250, S. 782-796 (1972)) bestimmt.

Die terminalen Thioalkylgruppen können durch Pfropfpolymerisation der genannten Monomeren oder Monomerengemische und $C_{1-18}$-Alkylmercaptan in Gegenwart der Pfropfgrundlage ausgeführt werden, wobei das als Kettenüberträger wirkende Mercaptan als endständige Thioalkylgruppe eingebaut wird.

Dabei muß der durch die endständigen Thioalkylgruppen eingebrachte Schwefelgehalt mindestens 90 Gew.-% des im Polymerisat insgesamt vorhandenen Schwefels betragen. Der Gehalt an aus anderen Quellen in die Polymeren gelangtem Schwefel, (beispielsweise durch Einbau von Initiatorbruchstücken oder durch Pfropfreaktion von schwefelhaltigen Emulgatoren), ist somit weniger als 10 Gew.-% des Gesamtschwefelgehalts im Polymerisat.

Beispiele für einsetzbare $C_{1-18}$-Alkylmercaptane sind Ethyl-, n-Propyl-, n-Butyl-, t-Butyl-, n-Pentyl-, n-Hexyl-, n-Octyl-, n-Decyl-, n-Dodecyl-, t-Dodecyl-, n-Hexadecyl- und n-Octadecylmercaptan. Bevorzugte Alkylmercaptane sind t-Dodecylmercaptan und n-Dodecylmercaptan bzw. deren Gemische.

Die Pfropfprodukte besitzen einen Kautschukgehalt von 1 - 80 Gew.-%, insbesondere 10 - 60 Gew.-%, die Gelgehalte, gemessen in Aceton bei 25°C, betragen 5 - 95 Gew.-%, insbesondere 20 - 80 Gew.-%.

Die Grenzviskosität der Pfropfauflagen aus den auf den teilchenförmigen Kautschuk polymerisierten Monomeren ist gemäß Makromol. Chemie 101, S. 200-213 (1967)) identisch mit der Grenzviskosität des bei der Pfropfpolymerisation mit entstandenen, nicht chemisch gebundenen Polymerisats, so daß die Grenzviskosität einfach an diesem leicht abtrennbaren Bestandteil gemessen werden kann. Phenolische Antioxidantien B im Sinne der Erfindung sind Verbindungen, die mindestens eine sterisch gehinderte phenolische Gruppierung enthalten.

Beispiele für solche Verbindungen sind
2,6-Di-t-butyl-4-methylphenol, 2,4,6-Tri-t-butylphenol, 2,2'-Methylen-bis-(4-methyl-6-t-butylphenol), 2,2'-Thiobis-(4-methyl-6-t-butylphenol), 4,4'-Thio-bis-(3-methyl-6-t-butylphenol), 4,4'-Butyliden-bis-(6-t-butyl-3-methylphenol), 4,4'-Methylen-bis-(2,6-di-t-butylphenol), 2,2'-Methylen-bis-[4-methyl-6-(1-methylcyclohexyl)phenol]-,Tetrakis [methylen-3-(3,5-di-t-butyl-4-hydroxyphenyl)-propionat]methan, 1,3,5-Trimethyl-2,4,6-tris(3,5-di-t-butyl-4-hydroxybenzyl)benzol,N,N'-Hexamethylenbis(3,5-di-t-butyl-4-hydroxy-hydrozimtsäureamid), Octadecyl-3-(3,5-di-t-butyl-4-hydroxyphenyl)propionat, 1,3,5-Tris (3,5-di-t-butyl-4-hydroxybenzyl)isocyanurat, 1,1,3-Tris (5-t-butyl-4-hydroxy-2-methylphenyl)butan, 1,3,5-Tris(3,5-di-t-butyl-4-hydroxybenzyl)mesitylen, Ethylenglykol-bis[3,3-bis(3'-t-butyl-4-hydroxyphenyl)butyrat], 2,2'-Thiodiethyl-bis-3-(3,5-di-t-butyl-4-hydroxyphenyl)propionat, Di-(3-t-butyl-4-hydroxy-5-methylphenyl)dicyclopentadien, 2,2'-Methylen-bis-(4-methyl-6-cyclohexylphenol), 1,6-Hexandiol-bis-3-(3,5-di-t-butyl-4-hydroxyphenyl)propionat, 2,4-Bis(n-octylthio)-6-(4-hydroxy-3,5-di-t-butylanilino)-1,3,5-triazin, 3,5-Di-t-butyl-4-hydroxybenzyl-phosphonsäurediethylester, Triethylenglykolbis-3-(t-butyl-4-hydroxy-5-methylphenyl)propionat.

Die erfindungsgemäßen Mischungen können zusätzlich phosphorhaltige Stabilisatoren C z.B. Distearylpentaerythritdiphosphit, Tris-(nonylphenyl)-phosphit, Tetrakis-(2,4-di-t-butylphenyl-4,4'-biphenylylendiphosphonit, Tris-(2,4-di-t-butylphenyl)phosphit, Neopentylgylkoltriethylenglykoldiphosphit, Diisodecylpentaerythritdiphosphit, Tristearylphosphit, Trilaurylphosphit, Triphenylphosphit und/oder stickstoffhaltige Stabilisatoren D, vorzugsweise aromatische Amine z.B. 4,4'-Di-t-octyldiphenylamin, Phenyl-$\beta$-naphthylamin, 4,4'-Di-($\alpha,\alpha$-di-methylbenzyl)-diphenylamin, N-Isopropyl-N'-phenyl-p-phenylendiamin, N-Phenyl-2-naphthylamin, Phenyl-2-aminonaphthalin enthalten.

Bevorzugte schwefelhaltige elastisch-thermoplastische Pfropfpolymerisate A sind Produkte, die durch Pfropfpolymerisation eines Gemisches aus

a) 50 - 80 Gew.-Teilen, vorzugsweise 55 - 75 Gew.-Teilen Styrol, $\alpha$-Methyl-Styrol, p-Methylstyrol, Vinyltoluol oder Mischungen daraus

b) 10 - 33 Gew,-Teilen, vorzugsweise 15 - 30 Gew.-Teilen Acrylnitril, Meth-Acrylnitril oder Mischungen daraus und

c) 7,5 - 25 Gew.-Teilen, vorzugsweise 8 - 15 Gew.-Teilen t-Dodecylmercaptan, n-Dodecylmercaptan oder deren Gemischen auf

d) 10-200 Gew.-Teile Polybutadien

oder aus

a') 25 - 75 Gew.-Teilen, vorzugsweise 30 bis 70 Gew.-Teilen Styrol, $\alpha$- Methyl-Styrol, p-Methylstyrol, Vinyltoluol oder Mischungen daraus

b') 25 - 75 Gew.-Teilen, vorzugsweise 30 bis 70 Gew.-Teilen Methylmethacrylat und

c') 7,5 - 25 Gew.-Teilen, vorzugsweise 8 bis 15 Gew.-Teilen t-Dodecylmercaptan, n-Dodecylmercaptan oder deren Gemische auf

d') 10 - 200 Gew.-Teile Polybutadien

oder aus

a″) 10 - 60 Gew.-Teilen, vorzugsweise 20 bis 50 Gew.-Teilen Styrol, α-Methylstyrol, p-Methylstyrol, Vinyltoluol oder Mischungen daraus,

b″) 10 - 60 Gew.-Teilen, vorzugsweise 20 - 50 Gew.-Teilen Methylmethacrylat,

c″) 10 - 30 Gew.-Teilen, vorzugsweise 15 - 27,5 Gew.-Teilen Acrylnitril, Meth-Acrylnitril oder deren Gemischen und

d″) 7,5 - 25 Gew.-Teilen, vorzugsweise 8 - 15 Gew.-Teilen t-Dodecylmercaptan, n-Dodecylmercaptan oder deren Gemische auf

e″) 10 - 200 Gew.-Teilen Polybutadien

oder aus

a‴) 50 - 80 Gew.-Teilen, vorzugsweise 55 - 75 Gew.-Teilen Methylmethacrylat

b‴) 10 - 30 Gew.-Teilen, vorzugsweise 15-27,5 Gew.-Teilen, Acrylnitril, Meth-Acrylnitril oder Mischungen daraus

c‴) 7,5 - 25 Gew.-Teilen t-Dodecylmercaptan, n-Dodecylmercaptan oder deren Gemische auf

d‴) 10 - 200 Gew.-Teile Polybutadien

erhalten worden sind.

Bevorzugte phenolische Anitoxidantien B sind:

2,6-Di-t-butyl-4-methylphenol, Octadecyl-3-(3,5-di-t-butyl-4-hydroxyphenyl)-propionat, Triethylenglykol-bis-3-(t-butyl-4-hydroxy-5-methylphenyl)propionat,1,6-Hexandiol-bis-3-(3,5-di-t-butyl-4-hydroxyphenyl)-propionat, 2,4-Bis-(n-octylthio)-6-(4-hydroxy-3,5-di-t-butylanilino)-1,3,5-triazin, Tetrakis[methylen-3-(3,5-di-t-butyl-4-hydroxyphenyl)propionat]methan, 2,2′-Thiodiethyl-bis-[3-(3,5-di-t-butyl-4-hydroxyphenyl)-propionat], 2,2′-Methylen-bis(4-methyl-6-cyclohexylphenol), N,N′-Hexamethylen-bis-(3,5-di-t-butyl-4-hydroxy-hydrozimtsäureamid)bzw. Mischungen daraus.

Bevorzugte phosphorhaltige stabilisierend wirkende Verbindungen sind Trisnonylphenylphosphit und Bisstearylpentaerythritdiphosphit.

Bevorzugt stickstoffhaltige stabilisierend wirkende Verbindungen sind solche, die sich von Diphenylamin ableiten.

Besonders bevorzugte stabilisierende Zusammensetzungen sind solche aus

A) 20 - 80 Gew.-% eines Pfropfproduktes, das durch Pfropfreaktion eines Gemisches aus 55 - 75 Gew.-Teilen Styrol, α-Methyl-Styrol oder deren Gemischen, 15 -30 Gew.-Teilen Acrylnitril, Meth-Acrylnitril oder deren Gemischen und 8 - 15 Gew.-Teilen t-Dodecylmercaptan auf 10-200 Gew.-Teile Polybutadien hergestellt wurde und

B) 80 - 20 Gew.-% eines phenolischen Antioxidans, ausgewählt aus den Verbindungen 2,6-Di-t-butyl-4-methylphenol, Octadecyl-3-(3,5-di-t-butyl-4-hydroxyphenyl)propionat, Triethylenglykol-bis-3-(t-butyl-4-hydroxy-5-methylphenyl)propionat,Tetrakis[methylen-3-(3,5-di-t-butyl-4-hydroxyphenyl)propionat]methan, 2,2′-Methylen-bis(4-methyl-6-cyclohexylphenol) oder Mischungen daraus.

Die erfindungsgemäßen synergistisch stabilisierend wirkenden Mischungen eignen sich als Mittel zur Stabilisierung von Polymeren gegen oxidativen Abbau bzw. sonstige durch Sauerstoffeinwirkung hervorgerufene Veränderungen.

Polymere, die durch Zusatz der Stabilisatorkombination stabilisiert werden können, sind z.B. Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, schlagzähes Polystyrol (HIPS), Polymethylmethacrylat, Polycarbonat, Polycarbonat/ABS-Gemische, Polyphenylenoxid, Polyphenylenoxid/HIPS-Gemische, Polyamide, z.B. Polyamid-6, Polyamid-66, Polyamid-12, Polyester, z.B. Polyethylenterephthalat, Polybutylenterephthalat, Polyolefine, z.B. Polyethylen, Polypropylen, Polyacetale, Polyurethane, Polybutadien, Styrol/Butadien-Kautschuke, Acrylnitril/Butadien-Kautschuke, Polychloropren, Polyisopren, Butlykautschuk, Ethylen/Propylen/Dien(EPDM)-Kautschuke, Acrylatkautschuke, Ethylen/Vinylacetat-Kautschuke, Vinylpyridin/Butadien-Kautschuke, Vinylpyridin/Styrol/Butadien-Kautschuke, Vinylpyridin/Acrylnitril/Butadien-Kautschuke, carboxylierte Kautschuke, Polyisobutylen.

Besonders gute Wirksamkeit zeigen die erfindungsgemäßen Mischungen bei der Stabilisierung von ABS-Polymerisaten, MBS-Polymerisaten, Styrol/Acrylnitril-Copolymerisaten, α-Methylstyrol/Acrylnitril-Copolymerisaten, schlagzähem Polystyrol, Polyolefinen und Kautschukpolymeren.

Die Einsatzmengen der erfindungsgemäßen Stabilisatormischungen betragen 0,1 - 15 Gew.-Teile, bevorzugt 0,5 -12 Gew.-Teile und besonders bevorzugt 1 - 10 Gew.-Teile pro 100 Gew.-Teile zu stabilisierendes Polymer.

Dabei kann die Stabilisatormischung in fester Form, als Aufschlämmung, als Lösung oder in Form einer Dispersion oder einer Emulsion zu dem Polymermaterial zugegeben werden. Es ist auch möglich, die Bestandteile der Stabilisatorzusammensetzung in verschiedenen Formen den Polymeren zuzusetzen. Je nach Art des zu stabilisierenden Polymeren wird auf Knetern, Walzen, in Emulsion oder in Lösung eingearbeitet.

Ein weiterer Gegenstand der Erfindung sind stabilisierte thermoplastische Formmassen, dadurch gekennzeichnet, daß sie 0,1 -15 Gew.-Teile, bevorzugt 0,5 - 12 Gew.-Teile und besonders bevorzugt 1 - 10 Gew.-Teile pro 100 Gew.-Teile Polymer der Stabilisatormischung aus schwefelhaltigem Pfropfpolymerisat und phenolischem Antioxidans enthalten.

Beispiele und Vergleichsbeispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Alle DSC-Messungen wurden unter Verwendung eines DSC-2-Meßgerätes der Firma Perkin Elmer durchgeführt (Spülgas Sauerstoff 3,6 l/h, Heizrate bei dynamischer Messung 20 K/min. Bei der Durchführung der nachstehend beschriebenen Versuche wurden folgende Substanzen eingesetzt:

A: Ein schwefelhaltiges elastisch-thermoplastisches Pfropfprodukt aus Styrol, Acrylnitril und t-Dodecylmercaptan auf Polybutadien, das wie folgt hergestellt wird:

50 Teile Polybutadien (in Form eines Latex mit einem Feststoffgehalt von 25 Gew.-%) mit einem mittleren Teilchendurchmesser von 0,4 μm werden unter Stickstoff auf 65°C erwärmt, wonach 0,5 Teile Kaliumpersulfat (gelöst in 20 Teilen Wasser) zugegeben werden. Anschließend werden ein Gemisch aus 25,2 Teilen Styrol, 9,8 Teilen Acrylnitril und 15 Teilen t-Dodecylmercaptan sowie 2 Teile des Natriumsalzes der disproportionierten Abietinsäure (gelöst in 25 Teilen Wasser) innerhalb von 4 Stunden zudosiert, wobei die Pfropfreaktion erfolgt.

Ein Teil des erhaltenen Latex wird in einer kalten Magnesiumsulfat/ Essigsäure-Lösung koaguliert. Das nach Trocknung bei 70°C im Vakuum erhaltene Polymerisat besitzt einen Schwefelgehalt von 2,25 %.

Anschließend wird das Polymerisat in einer Soxhlet-Apparatur mit Methylethylketon 24 Stunden lang extrahiert, wonach das Lösungsmittel im Vakuum vollständig entfernt wird. Das zurückbleibende Polymerisat besitzt eine Grenzviskosität von 5,4 ml/g (gemessen in DMF bei 25°C).

B: Ein schwefelhaltiges elastisch-thermoplastisches Pfropfprodukt aus Styrol, Acrylnitril und t.-Dodecylmercaptan auf Polybutadien, das wie folgt hergestellt wird:

20 Teile Polybutadien (in Form eines Latex mit einem Feststoffgehalt von 11,5 Gew.-%) mit einem mittleren Teilchendurchmesser von 0,4 μm werden unter Stickstoff auf 65°C erwärmt, wonach 0,5 Teile Kaliumpersulfat (gelöst in 20 Teilen Wasser) zugegeben werden. Anschließend werden ein Gemisch aus 46,8 Teilen Styrol, 18,2 Teilen Acrylnitril und 15 Teilen t-Dodecylmercaptan sowie 2 Teile des Natiumsalzes der disproportionierten Abietinsäure (gelöst in 25 Teilen Wasser) innerhalb 4 Stunden zudosiert, wobei die Pfropfreaktion erfolgt.

Ein Teil des erhaltenen Latex wird in einer kalten Magnesiumsulfat/Essigsäure-Lösung koaguliert. Das nach Trocknung bei 70°C im Vakuum erhaltene Polymerisat besitzt einen Schwefelgehalt von 2,3 %.

Anschließend wird das Polymerisat in einer Soxhlet-Apparatur mit Methylethylketon 24 Stunden lang extrahiert, wonach das Lösungsmittel im Vakuum vollständig entfernt wird. Das zurückbleibende Polymerisat besitzt eine Grenzviskosität von 6,1 ml/g (gemessen in DMF bei 25°C).

C: 2,6-Di-t-butyl-4-methylphenol

D: Triethylenglykol-bis-3-(t-butyl-4-hydroxy-5-methylphenyl)propionat (Irganox 245 der Ciba-Geigy)

E: Tetrakis[methylen-3-(3,5-di-t-butyl-4-hydroxyphenyl)-popionat]methan, (Irganox 1010 der Ciba Geigy)

F: Octadecyl-3-(3,5-di-t-butyl-4-hydroxyphenyl)-propionat (Irganox 1076 der Ciba Geigy)

G: 2,2'-Methylen-bis(4-methyl-6-cyclohexylphenol)

Die in Tabelle 1 aufgeführten Polymeren wurden unter Verwendung der angegebenen Stabilisatoren stabilisiert, die resultierende Stabilität wurde über DSC-Messungen ermittelt.

Die Einarbeitung der Stabilisatoren erfolgte jeweils in Emulsionsform zu den als wäßrige Emulsionen vorliegenden Polymeren.

**Tabelle 1:** Beispiele und Vergleichsbeispiele (vgl. Erläuterungen auf S. 17)

| Beispiel Nr. | Polymer | Stabilisator | Einarbeitung des Stabilisators | Thermostabilität bei DSC-Messungen $T_m$ [$^0$C] |
|---|---|---|---|---|
| 1(e) | (I) | 3B+1F | wäßrige Emulsion | 229 |
| 2(V) | " | - | - | 191 |
| 3(V) | " | 3B | wäßrige Emulsion | 207 |
| 4(V) | " | 1F | " " | 224 |
| 5(e) | (II) | 3A+1D | wäßrige Emulsion | 226 |
| 6(V) | " | - | - | 187 |
| 7(V) | " | 3A | wäßrige Emulsion | 202 |
| 8(V) | " | 1D | " " | 211 |
| 9(e) | (III) | 3A+1F | wäßrige Emulsion | 258 |
| 10(V) | " | - | - - | 229 |
| 11(V) | " | 3A | wäßrige Emulsion | 241 |
| 12(V) | " | 1F | " " | 241 |

EP 0 224 788 B1

Erläuterungen zur Tabelle 1

Beispiele:

(e):  erfindungsgemäß
(V):  Vergleich

## Tabelle 1: (Fortsetzung) Beispiele und Vergleichsbeispiele

| Beispiel Nr. | Polymer | Stabilisator | Einarbeitung des Stabilisators | Thermostabilität bei DSC-Messungen $T_m$ [$^o$C] |
|---|---|---|---|---|
| 13(e) | (IV) | 3B+1C | wäßrige Emulsion | 194 |
| 14(V) | " | - | - | - | 178 |
| 15(V) | " | 3B | wäßrige Emulsion | 186 |
| 16(V) | " | 1C | " | " | 190 |

Thermostabilität bei DSC-Messungen

$T_m$: Maximum der exothermen Reaktion bei dynamischer Messung

Verwendete Polymere:

(I): Pfropfpolymer von 36 Gew.-Tl. Styrol und 14 Gew.-Tl. Acrylnitril auf 50 Gew.-Tl. Polybutadien

(II): Polybutadien

(III): Butadien/Acrylnitril - 68:32 - Copolymerisat

(IV): Butadien/Styrol - 76:24 - Copolymerisat

Aus den Beispielen ist ersichtlich, daß die Verwendung der erfindungsgemäßen Stabilisatorzusammensetzungen zu deutlich besseren Oxidationsstabilitäten der damit ausgerüsteten Polymeren führt.

## Patentansprüche

1. Mischung aus

A) 1 - 99 Gew.-Teilen eines schwefelhaltigen elastisch-thermoplastischen Pfropfproduktes von Styrol, p-Methylstyrol, Vinyltoluol, Acrylnitril, Methylmethacrylat oder Mischungen daraus als Pfropfauflagen auf einen teilchenförmigen Kautschuk mit einem mittleren Teilchendurchmesser ($d_{50}$) von 0,05 bis 20,0 μm und einer Glastemperatur $\leq$ = 10°C als Pfropfgrundlage mit einem Gesamtkautschukgehalt von 1 - 80 Gew.-%, wobei die Pfropfprodukte einen Schwefelgehalt von 1,15 bis 3,95 Gew.-% besitzen, die Pfropfauflagen aus auf den teilchenförmigen Kautschuk polymerisierten Monomeren eine Grenzviskosität von 2 - 15 ml/g (gemessen in Dimethylformamid bei 25°C) aufweist und bei denen mindestens 90 Gew.-% des eingebauten Schwefels als Bestandteil terminaler $C_{1-18}$-Thioalkylgruppen vorliegt,

B) 99 - 1 Gew.-Teilen eines phenolischen Antioxidans.

2. Mischung nach Anspruch 1, dadurch gekennzeichnet, daß zusätzlich

C) 0 - 50 Gew.-Teile einer phosphorhaltigen stabilisierend wirkenden Verbindung und

D) 0 - 50 Gew.-Teile einer stickstoffhaltigen stabilisierend wirkenden Verbindung

in der Mischung enthalten sind.

3. Mischung nach Ansprüchen 1 und 2, dadurch gekennzeichnet, daß als Komponente A ein solches elastisch-thermoplastisches Pfropfprodukt eingesetzt wird, das durch Pfropfpolymerisation eines Gemisches aus

a) 50 - 80 Gew.-Teilen Styrol, α-Methyl-Styrol, p-Methylstyrol, Vinyltoluol oder Gemische daraus,

b) 10 - 33 Gew.-Teilen Acrylnitril, Meth-Acrylnitril oder Gemische daraus und

c) so vielen eines oder mehrerer $C_{1-18}$-Alkylmercaptane, daß ein Schwefelgehalt von 1,15 -3,95 Gew.-% im Polymerisat entsteht, auf

d) 10 - 200 Gew.-Teile Polybutadien

hergestellt worden ist.

4. Mischung nach Ansprüchen 1 und 2, dadurch gekennzeichnet, daß als Komponente A ein solches elastisch-thermoplastisches Pfropfprodukt eingesetzt wird, das durch Pfropfpolymerisation eines Gemisches aus

a) 50 - 80 Gew.-Teilen Styrol, α-Methyl-Styrol, p-Methylstyrol, Vinyltoluol oder Gemischen daraus

b) 10 - 33 Gew.-Teilen Acrylnitril, Meth-Acrylnitril oder Gemischen daraus und

c) 7,5 - 25 Gew.-Teilen t-Dodecylmercaptan, n-Dodecylmercaptan oder deren Gemischen auf

d) 10 - 200 Gew.-Teile Polybutadien

hergestellt worden ist.

5. Verwendung der Mischungen gemäß Ansprüchen 1 - 4 zur Stabilisierung von Polymeren,.

6. Polymere Formmassen, dadurch gekennzeichnet, daß sie die Mischungen gemäß Ansprüchen 1 - 4 in Mengen von 0,1 - 15 Gew.-%, bezogen auf das Polymere, enthalten.

7. Polymere Formmassen gemäß Anspruch 6, dadurch gekennzeichnet, daß sie ABS-Polymerisate, MBS-Polymerisate, schlagzähes Polystyrol, Polyolefine und/oder Kautschukpolymere enthalten.

**Claims**

1.  Composition of
    A) from 1 - 99 Parts by weight of a sulphur-containing elastic-thermoplastic graft product of styrene, p-methylstyrene, vinyl toluene, acrylonitrile, methylmethacrylate or mixtures thereof as graft scions on a particulate rubber having an average particle diameter ($d_{50}$) of from 0.05 to 20.0 $\mu$m and a glass temperature < 10 °C as graft basis having a total rubber content of from 1 - 80% by weight, in which the graft products have a sulphur content of from 1.15 to 3.95% by weight, the graft scions of monomers polymerised on the particulate rubber having a limiting viscosity number of from 2 - 15 ml/g (determined in dimethylformamide at 25 °C) and at least 90% by weight of the incorporated sulphur is present as component of terminal $C_{1-18}$-thioalkyl groups, and
    B) from 99 - 1 parts by weight of a phenolic antioxidant.

2.  Composition according to Claim 1, characterised in that the composition in addition contains
    C) from 0 - 50 parts by weight of a phosphorus-containing stabilizing compound and
    D) from 0 - 50 parts by weight of a nitrogen-containing stabilizing compound.

3.  Composition according to Claims 1 and 2, characterised in that the elastic-thermoplastic graft product used as component A is one which has been prepared by the graft polymerisation of a mixture of
    a) from 50 - 80 parts by weight of styrene, $\alpha$-methylstyrene, p-methylstyrene, vinyl toluene or mixtures thereof,
    b) from 10 to 33 parts by weight of acrylonitrile, methacrylonitrile or mixtures thereof and
    c) the quantity of one or more $C_{1-18}$-alkylmercaptans required to result in a sulphur content of from 1.15-3.95% by weight in the polymer
    on
    d) from 10 to 200 parts by weight of polybutadiene.

4.  Composition according to Claims 1 and 2, characterised in that the elastic-thermoplastic graft product used as component A is one which has been prepared by graft polymerisation of a mixture of
    a) from 50 - 80 parts by weight of styrene, $\alpha$-methylstyrene, p-methylstyrene, vinyl toluene or mixtures thereof,
    b) from 10 - 33 parts by weight of acrylonitrile, methacrylonitrile or mixtures thereof and
    c) from 7.5 - 25 parts by weight of t-dodecylmercaptan, n-dodecylmercaptan or mixtures thereof on
    d) from 10 - 200 parts by weight of polybutadiene.

5.  Use of the compositions according to Claims 1 - 4 for the stabilization of polymers.

6.  Polymeric moulding compounds, characterised in that they contain compositions according to Claims 1 - 4 in quantities of from 0.1 - 15% by weight, based on the polymer.

7.  Polymeric moulding compounds according to Claim 6, characterised in that they contain ABS polymers, MBS polymers, impact resistant polystyrene, polyolefins and/or rubber polymers.

**Revendications**

1.  Mélange de :
    A) 1 à 99 parties en poids d'un produit de greffage élastique-thermoplastique, contenant du soufre, du styrène, du p-méthylstyrène, du vinyltoluène, de l'acrylonitrile, du méthacrylate de méthyle ou d'un mélange de ces monomères, constituant la greffe, sur un caoutchouc en particules, à un diamètre de particule moyen ($d_{50}$) de 0,05 à 20,0 $\mu$m et une température de transition du second ordre inférieure ou égale à 10 °C, constituant le support de greffage, à une teneur totale en caoutchouc de 1 à 80 % en poids, le produit de greffage ayant une teneur en soufre de 1,15 à 3,95 % en poids, la greffe, consistant en les monomères polymérisés sur le caoutchouc en particules, ayant une viscosité limite de 2 à 15 ml/g (mesure dans le diméthylformamide à 25 °C), et dans lequel au moins 90 % du poids du soufre incorporé sont à l'état de constituant de groupes terminaux thioalkyle en $C_1-C_{18}$,
    B) 99 à 1 partie en poids d'un antioxydant phénolique.

2. Mélange selon la revendication 1, caractérisé en ce qu'il contient en outre

C) 0 à 50 parties en poids d'un composé phosphoré à effet stabilisant, et

D) 0 à 50 parties en poids d'un composé azoté à effet stabilisant.

3. Mélange selon les revendications 1 et 2, caractérisé en ce que le composant A est un produit de greffage élastique-thermoplastique qui a été préparé par polymérisation greffée d'un mélange de :

a) 50 à 80 parties en poids de styrène, d'α-méthylstyrène, de p-méthylstyrène, de vinyltoluène ou d'un mélange de ces monomères,

b) 10 à 33 parties en poids d'acrylonitrile, de méthacrylonitrile ou d'un mélange de ces monomères, et

c) un ou plusieurs alkylmercaptans en $C_1$-$C_{18}$, en proportions telles que le polymère présente une teneur en soufre de 1,15 à 3,95 % en poids,

sur

d) 10 à 200 parties en poids de polybutadiène.

4. Mélange selon les revendications 1 et 2, caractérisé en ce que le composant A consiste en un produit de greffage élastique-thermoplastique qui a été préparé par polymérisation greffée d'un mélange de :

a) 50 à 80 parties en poids de styrène, d'α-méthylstyrène, de p-méthylstyrène, de vinyltoluène ou d'un mélange de ces monomères,

b) 10 à 33 parties en poids d'acrylonitrile, de méthacrylonitrile ou d'un mélange de ces monomères, et

c) 7,5 à 25 parties en poids de tert-dodécylmercaptan, de n-dodécylmercaptan ou d'un mélange de ces composés,

sur

d) 10 à 200 parties en poids de polybutadiène.

5. Utilisation des mélanges selon les revendications 1 à 4 pour la stabilisation de polymères.

6. Matières à mouler polymères, caractérisées en ce qu'elles contiennent les mélanges selon les revendications 1 à 4 en quantités de 0,1 à 15 % du poids du polymère.

7. Matières à mouler polymères selon la revendication 6, caractérisées en ce qu'elles contiennent des polymères ABS, des polymères MBS, du polystyrène résistant au choc, des polyoléfines et/ou des polymères du type caoutchouc.